# EUROPEAN PATENT SPECIFICATION

(11) **EP 3 806 625 B1**
(45) Date of publication and mention of the grant of the patent: **17.12.2025**
(21) Application number: 19820472.9
(22) Date of filing: 13.06.2019
(51) Int. Cl.: A01K 61/10, A01K 61/13, C02F 1/46, C02F 1/467, C02F 1/461

(54) **APPARATUS FOR INJURING OR KILLING UNDESIRED ORGANISMS IN WATER**
VORRICHTUNG ZUR VERLETZUNG ODER ABTÖTUNG UNERWÜNSCHTER ORGANISMEN IN WASSER
APPAREIL POUR BLESSER OU TUER DES ORGANISMES INDÉSIRABLES DANS L'EAU

(30) Priority: 14.06.2018 NO 20180828
(43) Date of publication of application: 21.04.2021
(73) Proprietor: Askvik Aqua AS, 4130 Hjelmeland (NO)
(72) Inventor: ERITZLAND, Rune, 4032 Stavanger (NO)
(74) Representative: Håmsø Patentbyrå AS
(86) International application number: PCT/NO2019/050123
(87) International publication number: WO 2019/240595

(56) References cited:
- EP-B1- 1 689 685
- DE-A1- 102008 055 792
- KR-B1- 101 149 377
- KR-B1- 101 219 752
- US-A- 3 933 606
- US-A1- 2005 224 369
- US-A1- 2016 340 213

## Description

The invention relates to an apparatus for injuring or killing undesired organisms in water. More particularly, the invention relates to an apparatus comprising an insert which may be put into a pipe or a channel and be taken out again from the pipe or channel. The water, which may contain the undesired organisms, flows through the pipe or channel and past the apparatus. The invention further relates to the apparatus being arranged to be positioned internally in a pipe or in a channel that supplies a closed farming facility with water, especially sea water, from a depth below the farming facility. The undesired organisms may especially comprise eggs and pelagic larvae of salmon lice. The apparatus is provided with a plurality of elongated electrodes. The electrodes are supplied with power from a power-supply unit so that an electric field is formed inside the pipe or channel. The electric field is of such a quality that the undesired organisms are killed or at least get so much injury inflicted on them that the organisms are no longer infectious after having passed the electric field.

Fish-farming in closed enclosures involves keeping a large number of fish together in a small area. This gives good conditions for parasites. In salmonid farming, external crustacean parasites have become a problem. Especially salmon lice (*Lepeophtheirus salmonis*) are present in large numbers. It is necessary to treat fish that are infected with salmon lice, to keep the amount of parasites down and to safeguard the welfare of the fish.

So-called closed facilities or closed cages have been developed for the farming of fish. By a closed facility is meant that the enclosure for fish comprises a liquid-tight wall and bottom. The wall may be formed from a rigid material such as a hard plastic, concrete or a metal. The wall may also be formed from a soft material such as a plastic sheet. The water inside the enclosure is changed by water being pumped in and by water being carried out through openings in the bottom or in the wall. The openings are secured so that fish cannot escape through the openings. The water that is pumped in may be taken through a pipe from a desired depth, and the depth may be varied. The pump sits inside the pipe.

The first stages of salmon lice are pelagic larvae. After hatching, the salmon-louse larva goes through two nauplius stages and the copepodid stage. The copepodid stage is the infectious stage that attaches to the host. The pelagic salmon lice have a limited ability to swim, but they are phototactic so that they stay in the upper part of the water column. One of the advantages of a closed facility is that the facility has the possibility of having a water inlet so deep that eggs and salmon-louse larvae will not get into the enclosure via the supply water. However, experience has proved that in some cases, salmon-louse larvae are entrained in the supply water even if the inlet is placed at a depth of 20 metres and even at a depth of 30 metres.

Salmon lice that have come into a closed facility will multiply and give the same problems of salmon-louse infection as in an open facility.

Patent document EP2837284 discloses the use of an electric field to remove salmon lice from fish. The fish is guided through a chamber provided with electrodes called "reflectors". The patent document is silent about to the shape of the electrodes and how the electrodes are attached to the chamber.

It is known that an electric field between submerged electrodes may kill salmon lice. The electric field must have a quality that kills salmon lice and eggs. By quality is meant that there must be a sufficient difference in voltage between the electrodes, and the electric field must have sufficient strength. It is known that it is advantageous to use direct current which switches between being on an off, so-called pulses, and that the electrodes may alternate in polarity. That is to say, a positive electrode will be a negative electrode at the next electric pulse.

Sea water is an electrolyte. It is well known that electrodes in sea water corrode away and must be replaced. The time it takes is dependent on, *inter alia,* the voltage and the amperage. Electrodes made of titanium have relatively good resistance to corrosion, but even electrodes made of titanium will corrode away.

Water that is to be treated with an electric field may be passed through an electric field in a pipe or in a channel. In what follows, a channel will also comprise a pipe. It is technically obvious that such a channel must be formed from a non-conductive material. A channel made of metal will conduct electricity and the current will travel into an entire facility if a channel made of metal is connected to a pipe system made of metal. This will lead to extensive corrosion damage in the entire facility. Polyethene (PE) is an example of a suitable plastic material for such a channel.

It is relatively large amounts of water that must be treated per time unit, and the channel must be dimensioned accordingly. For example, the channel may have an inner diameter of 80 cm. A voltage of between 12 and 200 V combined with amperage of between 50 A and 500 A may be necessary to achieve the desired quality of the electric field.

US 3933606 A discloses a process and apparatus for electrolytically removing suspended and dissolved impurities from contaminated water. Contaminated water is fed to a column where it is exposed to an electrical field created between a plurality of oppositely charged perforate plates by a pulsating electrical signal. However, in this approach, the transversal plates, which are provided transversally within the column and with transverse dimensions approximate the inner diameter of the column, are difficult to replace, as these require the entirety of the plates assembly to be disassembled before a single plate can be replaced.

KR 101149377 B1 discloses a sterilization apparatus for a fish farm, the apparatus being intended for an easy installation within a conduit line in which water flows, so that a sterilization process can be performed in the water flow. However, replacing the electrodes used in this approach is a complex process. Removing the electrodes can only be achieved after various disassembling steps. Also, it is not easy to replace the first electrode part (reference number 121) once this has been press-fitted to the inner surface of the flow path. Moreover, the first electrode part is highly complex, being formed in a coil shape along the inner surface of the flow path to increase the contact time with water flowing through the flow path as well keeping conductivity uniform with the second electrode part (reference number 123) in all parts.

US 2016/0340213 A1 discloses a device for killing microorganisms in ballast water. The device includes a main body and plate shaped electrodes positioned in parallel within the main body. The plate shaped electrodes are perforated. A straightened flow of liquid to be treated is passed between the plates in parallel with the plate shaped electrodes.

The person skilled in the art is thus faced with a problem in using electricity to ensure that pelagic salmon-louse larvae and salmon-louse eggs in supply water are killed or rendered harmless before the water is carried into a closed farming facility. Replacing the electrodes is part of the problem.

The invention has for its object to remedy or to reduce at least one of the drawbacks of the prior art or at least provide a useful alternative to the prior art.

The object is achieved through the features that are specified in the description below and in the claims that follow.

In a first aspect, the invention relates, more specifically, to an apparatus for putting into a cylindrical channel in use for injuring or killing undesired organisms in water in the channel, wherein the apparatus comprises:
- an insert which is arranged to be releasably attachable to the channel on the inside of the channel in use, the insert being formed from an electrically insulating material, the insert is elongated with a first longitudinal axis; and
- a plurality of electrodes which are attached to the insert and connected to a power-supply unit, and each electrode is elongated with a second longitudinal axis, each second longitudinal axis being substantially parallel to the first longitudinal axis, and wherein a free end portion of each of the plurality of electrodes is connected to an electrical conductor, which electrical conductor is connected to a direct current supply, which includes a control unit, in such a way that the electrodes are connected in pairs with a positive pole and a negative pole in each pair. The insert includes, and each electrode is held by each of, a first electrode holder and a second electrode holder, wherein the first and second electrode holders are formed as short cylinders with an outer diameter smaller than an inner diameter of the cylindrical channel, wherein:

- the first electrode holder is provided with a plurality of through axial openings, each axial opening being adapted to house one electrode; and
- the second electrode holder is provided with a plurality of axial recesses, each axial recess being adapted to house one electrode.

In a non-claimed embodiment, the longitudinal axis of the electrode may be substantially perpendicular to the first longitudinal axis.

The insert may include at least one first spacer between the first electrode holder and the second electrode holder.

The insert may include an attachment device and a second spacer between the attachment device and the first electrode holder.

In a second aspect, the invention relates more specifically to a method for injuring or killing undesired organisms in water in a channel, the method comprising the steps:
a) providing an apparatus according to any one of the preceding claims;
b) for each of the plurality of electrodes, connecting one electrical conductor to a free end portion of the electrode;
c) positioning the plurality of electrodes of the apparatus internally in the channel so that at least a portion of each electrode is submerged in the water in the channel;
d) attaching the apparatus internally to the channel;
e) connecting the plurality of electric electrodes via the electrical conductors to a direct-current supply, which includes a control unit, in such a way that the plurality of electrodes are connected in pairs with a positive pole and a negative pole in each pair; and
f) supplying a pulsed direct current to the plurality of electrodes.

In step f), the method may include changing the polarity between the pulses. In step f), the method may include using direct current at a voltage of between 12 V and 200 V. In step f), the method may include using direct current at amperage of between 50 A and 200 A. In step f), the method may include using direct current at a voltage of between 12 V and 200 V combined with amperage of between 50 A and 200 A.

In what follows, an example of a preferred embodiment is described, which is visualized in the accompanying drawings in which:
- Figure 1: shows a side view of the apparatus according to the invention;
- Figure 2: shows a view, on a larger scale, of the apparatus seen from one end; and
- Figure 3: shows a perspective view, on a different scale, of an alternative non-claimed design of the apparatus.

In the drawings, the reference numeral 1 indicates an apparatus which is arranged to be put into a cylindrical channel 2 and taken out of the channel 2. The apparatus 1 comprises a plurality of elongated electrodes 3 with longitudinal axes 83. The electrodes 3 are attached to an insert 4. The insert 4 forms a longitudinal axis 84. Each electrode 3 is connected to a power-supply unit (not shown) with an electrical conductor (not shown). The insert 4 consists of an electrically insulating material such as polyethene. The insert 4 is arranged to be attached internally in the channel 2.

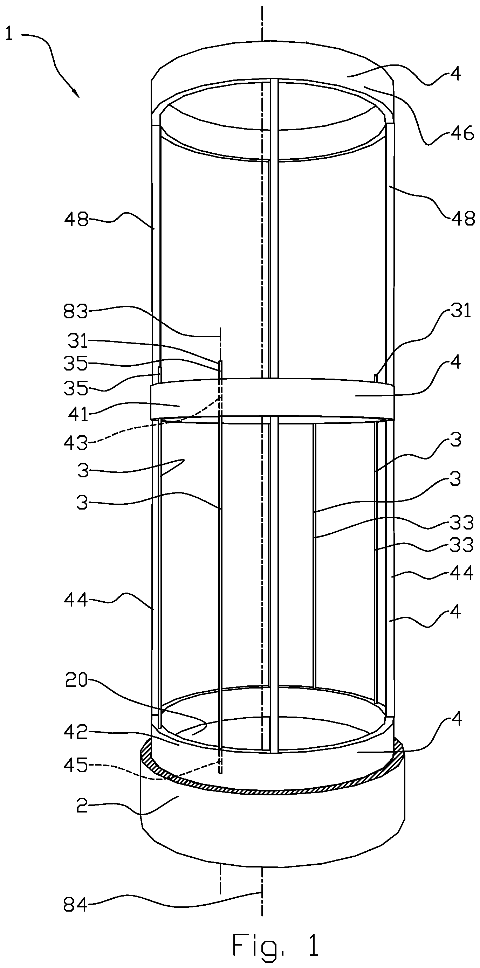

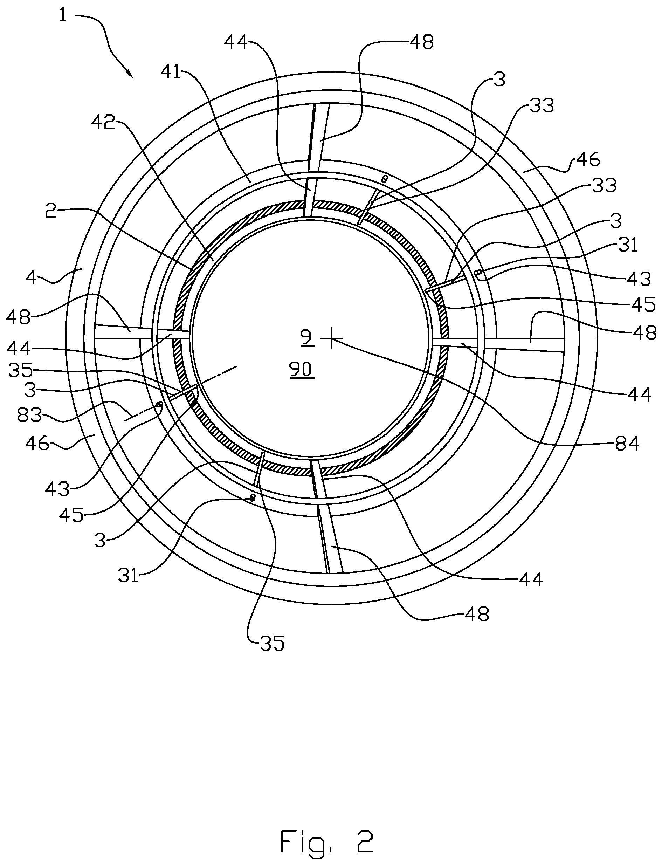

In the embodiment that is shown in figures 1 and 2, the insert 4 is formed with a first electrode holder 41 and a second electrode holder 42. The first electrode holder 41 and the second electrode holder 42 are shown formed as short cylinders with an outer diameter that is somewhat smaller than an inner diameter of the cylindrical channel 2.

The first electrode holder 41 is shown provided with a plurality of through axial openings 43. The second electrode holder 42 is shown provided with a plurality of axial recesses 45. The electrode 3 has been passed through the opening 43 and into the recess 45. The insert 4 further includes a plurality of first spacers 44 which connect the first electrode holder 41 axially to the second electrode holder 42.

The insert 4 further includes an attachment device 46. In figures 1 and 2, the attachment device 46 is shown formed as a short cylinder with an outer diameter that is somewhat smaller than the inner diameter of the cylindrical channel 2. A plurality of second spacers 48 connect the first electrode holder 41 axially to the attachment device 46. The attachment device 46 is arranged to be attachable to the inside 20 of the channel 2, for example with screws.

In the figures, the electrodes 3 are shown positioned diagonally. With reference to figure 2, a first electrode group 33 is positioned at about "one o'clock" and "two o'clock" and a second electrode group 35 is positioned at about "seven o'clock" and "eight o'clock". In another embodiment, the electrodes 3 may be positioned with approximately equal peripheral spacing of the electrodes 3 (not shown).

Each electrode 3 has a free end portion 31 projecting axially from the first electrode holder 41. An electrical conductor (not shown) is connected to the free end portion 31. A heat-shrinkable tubing (not shown) may cover the connection between the electrode 3 and the electrical conductor to prevent corrosion on the electrical conductor.

The electrodes 3 of the first electrode group 33 are connected in parallel to the power-supply unit. The electrodes 3 of the second electrode group 35 are connected in parallel to the power-supply unit, and the second electrode group 35 has opposite polarity to the first electrode group 33.

In other embodiments, each electrode group 33, 35 may comprise more than two electrodes 3. The apparatus 1 may include more than two electrode groups 33, 35, like four or six electrode groups, and each of these electrode groups may comprise two or more than two electrodes 3.

The insert 4 may in non-claimed embodiments be formed in different ways from that shown in the figures. In an alternative embodiment (not shown), the insert 4 may be formed of an elongated central stem with a longitudinal axis 84. A star-shaped first electrode holder 41 has a number of arms directed radially out from the stem. A star-shaped second electrode holder 42 has a number of arms directed radially out from the stem. An electrode 3 is attached to a free end portion of an arm in the first electrode holder 41 and to a free end portion of an arm in the second electrode holder 42 so that the longitudinal axis 83 of the electrode 3 is substantially parallel to the longitudinal axis 84 of the insert 4.

The attachment device 46 may also be star-shaped with a number of arms that may be equal to or different from the number of arms of the first electrode holder 41.

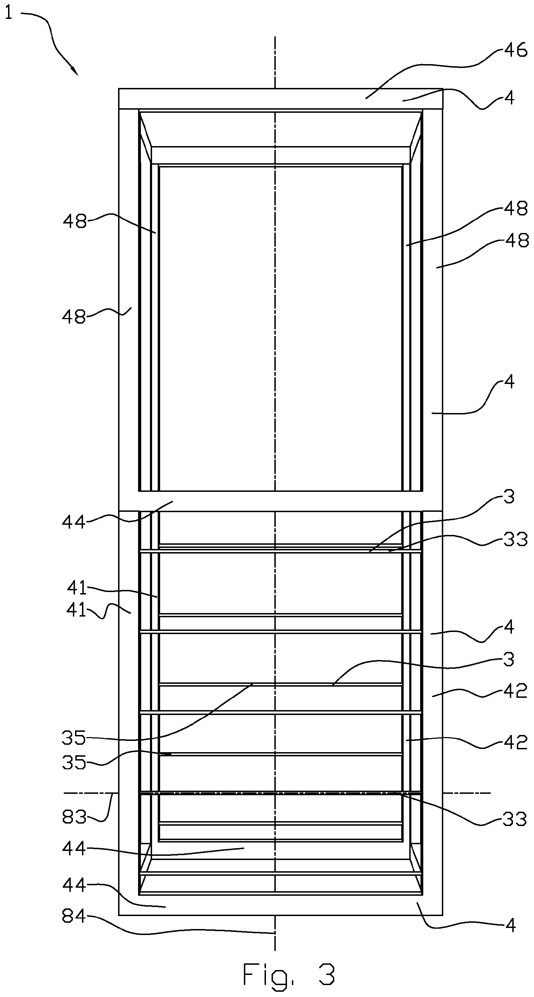

The insert 4 is shown in a further non-claimed embodiment in figure 3. The apparatus 1 includes a plurality of elongated electrodes 3 with longitudinal axes 83. The electrodes 3 are attached to the insert 4. The insert 4 forms a longitudinal axis 84. Each electrode 3 is connected to a power-supply unit (not shown) with an electrical conductor (not shown). The insert 4 is formed from an electrically insulating material such as polyethene. The insert 4 is arranged to be attachable internally in the channel 2 (not shown in figure 3).

The insert 4 is formed with a first electrode holder 41 and a second electrode holder 42. The insert 4 further includes a plurality of first spacers 44 connecting the first electrode holder 41 to the second electrode holder 42. A plurality of spacers 48 connect the first electrode holder 41 and the second electrode holder 42 axially to the attachment device 46. The attachment device 46 is arranged to be attachable to the inside 20 of the channel 2, for example with screws.

In this embodiment, the longitudinal axis 83 of the electrode 3 is oriented substantially perpendicularly to the longitudinal axis 84 of the insert 4. The first electrode group 33 is positioned on one side of the insert 4, and the second electrode group 35 is positioned on the opposite side of the insert 4.

The channel 2 may be formed of a pipe extending from a closed facility (not shown) and down a water column (not shown). At a lower portion, the pipe is provided with an inlet (not shown). In an upper portion, the pipe is formed with a T-connection (not shown), and one branch of the T-connection extends substantially horizontally into the closed facility. A pump (not shown) is positioned in the upper portion of the pipe and below the T-connection. The T-connection also has a maintenance branch (not shown) projecting substantially vertically up from the T-connection.

Depending on the positioning of the pump in the pipe, the apparatus 1 is positioned internally in the pipe either above the pump or below the pump. When the pump is below the apparatus 1, the electrodes 3 are positioned below the horizontal branch of the T-connection, whereas the attachment device 46 is attached internally in the maintenance branch. When the pump is above the apparatus 1, the pump is first lifted out of the pipe through the maintenance branch, the attachment device 46 is attached internally in the pipe below the T-connection and the pump is put back into the pipe.

The apparatus 1 is arranged to injure or kill undesired organisms in water 9 entering the channel 2. Undesired organisms may be crustacean parasites, like salmon lice, in sea water 90. In particular, salmon lice may be in one of the three pelagic stages, the nauplius stages I and II and the copepodid stage. After having passed the apparatus 1, the salmon louse will not be able to infect salmonids.

Pulsed current with changing polarity has turned out to be well suited for the purpose. Direct current at a voltage of between 12 V and 200 V, at amperage of between 50 A and 200 A and with pulses lasting for 2 ms with breaks of 15-20 ms between the pulses is an example of a suitable regime.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. An apparatus (1) for putting into a cylindrical channel (2) in use for injuring or killing undesired organisms in water (9) in the channel (2), wherein the apparatus (1) comprises:
- an insert (4) which is arranged to be releasably attachable to the channel (2) on the inside (20) of the channel (2) in use, the insert (4) being formed from an electrically insulating material, the insert (4) is elongated with a first longitudinal axis (84); and
- a plurality of electrodes (3) which are attached to the insert (4) and connected to a power-supply unit, and each electrode (3) is elongated with a second longitudinal axis (83), each second longitudinal axis (83) being substantially parallel to the first longitudinal axis (84), and wherein a free end portion (31) of each of the plurality of electrodes (3) is connected to an electrical conductor, which electrical conductor is connected to a direct current supply, which includes a control unit, in such a way that the electrodes (3) are connected in pairs with a positive pole and a negative pole in each pair,
**characterized in that**
the insert (4) includes, and each electrode (3) is held by each of, a first electrode holder (41) and a second electrode holder (42), wherein the first and second electrode holders (41, 42) are formed as short cylinders with an outer diameter smaller than an inner diameter of the cylindrical channel (2), wherein:
- the first electrode holder (41) is provided with a plurality of through axial openings (43), each axial opening (43) being adapted to house one electrode (3); and
- the second electrode holder (42) is provided with a plurality of axial recesses (45), each axial recess (45) being adapted to house one electrode (3).

2. The apparatus (1) according to claim 1, wherein the plurality of electrodes (3) comprises at least four electrodes (3).

3. The apparatus (1) according to claim 2, wherein the at least four electrodes (3) are organized into electrode groups (33, 35), each electrode (3) within an electrode group (33, 35) being connected in parallel to the power supply-unit.

4. The apparatus (1) according to claim 3, wherein each electrode group (33, 35) comprises more than two electrodes (3).

5. The apparatus (1) according to claim 1, wherein the insert (4) includes at least one first spacer (44) between the first electrode holder (41) and the second electrode holder (42).

6. The apparatus (1) according to claim 5, wherein the insert (4) includes an attachment device (46) and a second spacer (48) between the attachment device (46) and the first electrode holder (41).

7. A method for injuring or killing undesired organisms in water (9) in a channel (2), the method comprising the steps:
a) providing an apparatus (1) according to any one of the preceding claims;
b) for each of the plurality of electrodes (3), connecting one electrical conductor to a free end portion (31) of the electrode (3);
c) positioning the plurality of electrodes (3) of the apparatus (1) internally in the channel (2) so that at least a portion of each electrode (3) is submerged in the water (9) in the channel (2);
d) attaching the apparatus (1) internally to the channel (2);
e) connecting the plurality of electric electrodes (3) via the electrical conductors to a direct-current supply, which includes a control unit, in such a way that the plurality of electrodes (3) are connected in pairs with a positive pole and a negative pole in each pair; and
f) supplying a pulsed direct current to the plurality of electrodes (3).

8. The method according to claim 7, wherein the method, in step f), includes changing the polarity between the pulses.

9. The method according to claim 7, wherein the method, in step f), includes using direct current at a voltage of between 12 V and 200 V.

10. The method according to claim 7, wherein the method, in step f), includes using direct current at amperage of between 50 A and 200 A.

## Patentansprüche

1. Vorrichtung (1) zum Einbringen in einen zylindrischen Kanal (2) während des Gebrauchs, um unerwünschte Organismen im Wasser (9) im Kanal (2) zu verletzen oder abzutöten, wobei die Vorrichtung (1) Folgendes umfasst:
- einen Einsatz (4), der so angeordnet ist, dass er während des Gebrauchs lösbar an dem Kanal (2) an der Innenseite (20) des Kanals (2) befestigt werden kann, wobei der Einsatz (4) aus einem elektrisch isolierenden Material gebildet ist, wobei der Einsatz (4) mit einer ersten Längsachse (84) verlängert ist; und
- eine Vielzahl von Elektroden (3), die an dem Einsatz (4) befestigt und mit einer Stromversorgungseinheit verbunden sind, und jede Elektrode (3) mit einer zweiten Längsachse (83) verlängert ist, wobei jede zweite Längsachse (83) im Wesentlichen parallel zur ersten Längsachse (84) ist, und wobei ein freier Endabschnitt (31) jeder der Vielzahl von Elektroden (3) mit einem elektrischen Leiter verbunden ist, wobei der elektrische Leiter mit einer Gleichstromversorgung verbunden ist, die eine Steuereinheit einschließt, derart, dass die Elektroden (3) paarweise mit einem positiven Pol und einem negativen Pol in jedem Paar verbunden sind,
**dadurch gekennzeichnet, dass**
der Einsatz (4) einen ersten Elektrodenhalter (41) und einen zweiten Elektrodenhalter (42) einschließt und jede Elektrode (3) von jedem derselben gehalten wird, wobei der erste und der zweite Elektrodenhalter (41, 42) als kurze Zylinder mit einem Außendurchmesser gebildet sind, der kleiner ist als ein Innendurchmesser des zylindrischen Kanals (2), wobei:
- der erste Elektrodenhalter (41) mit einer Vielzahl von axialen Durchgangsöffnungen (43) bereitgestellt ist, wobei jede axiale Öffnung (43) dazu angepasst ist, eine Elektrode (3) aufzunehmen; und
- der zweite Elektrodenhalter (42) mit einer Vielzahl von axialen Aussparungen (45) bereitgestellt ist, wobei jede axiale Aussparung (45) dazu angepasst ist, eine Elektrode (3) aufzunehmen.

2. Vorrichtung (1) nach Anspruch 1, wobei die Vielzahl von Elektroden (3) mindestens vier Elektroden (3) umfasst.

3. Vorrichtung (1) nach Anspruch 2, wobei die mindestens vier Elektroden (3) in Elektrodengruppen (33, 35) organisiert sind, wobei jede Elektrode (3) innerhalb einer Elektrodengruppe (33, 35) parallel zur Stromversorgungseinheit verbunden ist.

4. Vorrichtung (1) nach Anspruch 3, wobei jede Elektrodengruppe (33, 35) mehr als zwei Elektroden (3) umfasst.

5. Vorrichtung (1) nach Anspruch 1, wobei der Einsatz (4) mindestens einen ersten Abstandshalter (44) zwischen dem ersten Elektrodenhalter (41) und dem zweiten Elektrodenhalter (42) einschließt.

6. Vorrichtung (1) nach Anspruch 5, wobei der Einsatz (4) eine Befestigungseinrichtung (46) und einen zweiten Abstandshalter (48) zwischen der Befestigungsvorrichtung (46) und dem ersten Elektrodenhalter (41) einschließt.

7. Verfahren zum Verletzen oder Abtöten unerwünschter Organismen in Wasser (9) in einem Kanal (2), wobei das Verfahren die folgenden Schritte umfasst:
a) Bereitstellen einer Vorrichtung (1) nach einem der vorstehenden Ansprüche;
b) bei jeder der Vielzahl von Elektroden (3), Verbinden eines elektrischen Leiters mit einem freien Endabschnitt (31) der Elektrode (3);
c) Positionieren der Vielzahl von Elektroden (3) der Vorrichtung (1) innerhalb des Kanals (2), sodass zumindest ein Abschnitt jeder Elektrode (3) in das Wasser (9) im Kanal (2) eingetaucht ist;
d) Befestigen der Vorrichtung (1) im Inneren des Kanals (2);
e) Verbinden der Vielzahl von elektrischen Elektroden (3) über die elektrischen Leiter mit einer Gleichstromversorgung, die eine Steuereinheit einschließt, derart, dass die Vielzahl von Elektroden (3) paarweise mit einem positiven Pol und einem negativen Pol in jedem Paar verbunden sind; und
f) Zuführen eines gepulsten Gleichstroms zu der Vielzahl von Elektroden (3).

8. Verfahren nach Anspruch 7, wobei das Verfahren in Schritt f) das Ändern der Polarität zwischen den Impulsen einschließt.

9. Verfahren nach Anspruch 7, wobei das Verfahren in Schritt f) die Verwendung von Gleichstrom mit einer Spannung zwischen 12 V und 200 V einschließt.

10. Verfahren nach Anspruch 7, wobei das Verfahren in Schritt f) die Verwendung von Gleichstrom mit einer Stromstärke zwischen 50 A und 200 A einschließt.

## Revendications

1. Appareil (1) destiné à être placé dans un conduit cylindrique (2) utilisé pour blesser ou tuer des organismes indésirables dans l'eau (9) dans le conduit (2), dans lequel l'appareil (1) comprend :
- une pièce à insérer (4), qui est agencée pour pouvoir être fixée de manière amovible au conduit (2) sur l'intérieur (20) du conduit (2) en service, la pièce à insérer (4) étant formée à partir d'un matériau électriquement isolant, la pièce à insérer (4) étant allongée avec un premier axe longitudinal (84) ; et
- une pluralité d'électrodes (3), qui sont fixées à la pièce à insérer (4) et raccordées à une unité d'alimentation électrique, et chaque électrode (3) est allongée avec un second axe longitudinal (83), chaque second axe longitudinal (83) étant sensiblement parallèle au premier axe longitudinal (84), et
dans lequel une portion d'extrémité libre (31) de chaque électrode de la pluralité d'électrodes (3) est raccordée à un conducteur électrique, lequel conducteur électrique est raccordé à une alimentation en courant continu, qui inclut une unité de commande, de telle sorte que les électrodes (3) sont raccordées en paires avec un pôle positif et un pôle négatif dans chaque paire,
**caractérisé en ce que**
la pièce à insérer (4) inclut, et chaque électrode (3) est maintenue par chacun parmi, un premier porte-électrode (41) et un second porte-électrode (42), dans lequel les premier et second porte-électrodes (41, 42) sont formés en tant que cylindres courts avec un diamètre externe inférieur à un diamètre interne du conduit cylindrique (2), dans lequel :
- le premier porte-électrode (41) présente une pluralité d'ouvertures axiales traversantes (43), chaque ouverture axiale (43) étant adaptée pour loger une électrode (3) ; et
- le second porte-électrode (42) présente une pluralité d'évidements axiaux (45), chaque évidement axial (45) étant adapté pour loger une électrode (3).

2. Appareil (1) selon la revendication 1, dans lequel la pluralité d'électrodes (3) comprend au moins quatre électrodes (3).

3. Appareil (1) selon la revendication 2, dans lequel les au moins quatre électrodes (4) sont organisées en groupes d'électrodes (33, 35), chaque électrode (3) au sein d'un groupe d'électrodes (33, 35) étant raccordée en parallèle à l'unité d'alimentation électrique.

4. Appareil (1) selon la revendication 3, dans lequel chaque groupe d'électrodes (33, 35) comprend plus de deux électrodes (3).

5. Appareil (1) selon la revendication 1, dans lequel la pièce à insérer (4) inclut au moins une première entretoise (44) entre le premier porte-électrode (41) et le second porte-électrode (42).

6. Appareil (1) selon la revendication (5), dans lequel la pièce à insérer (4) inclut un dispositif de fixation (46) et une seconde entretoise (48) entre le dispositif de fixation (46) et le premier porte-électrode (41).

7. Procédé destiné à blesser ou tuer des organismes indésirables dans l'eau (9) dans un conduit (2), le procédé comprenant les étapes suivantes :
a) se munir d'un appareil (1) selon l'une quelconque des revendications précédentes ;
b) pour chaque électrode de la pluralité d'électrodes (3), raccorder un conducteur électrique à une portion d'extrémité libre (31) de l'électrode (3) ;
c) positionner la pluralité d'électrodes (3) de l'appareil (1) à l'intérieur du conduit (2) de sorte qu'au moins une portion de chaque électrode (3) est immergée dans l'eau (9) dans le conduit (2) ;
d) fixer l'appareil (1) à l'intérieur du conduit (2) ;
e) raccorder la pluralité d'électrodes électriques (3) via les conducteurs électriques à une alimentation en courant continu qui inclut une unité de commande, de telle sorte que la pluralité d'électrodes (3) sont raccordées en paires avec un pôle positif et un pôle négatif dans chaque paire ; et
f) fournir un courant continu pulsé à la pluralité d'électrodes (3).

8. Procédé selon la revendication 7, dans lequel le procédé, à l'étape f), inclut le fait de changer la polarité entre les impulsions.

9. Procédé selon la revendication 7, dans lequel le procédé, à l'étape f), inclut le fait d'utiliser un courant continu à une tension comprise entre 12 V et 200 V.

10. Procédé selon la revendication 7, dans lequel le procédé, à l'étape f), inclut le fait d'utiliser un courant continu à un ampérage compris entre 50 A et 200 A.
